# EUROPÄISCHE PATENTSCHRIFT

(11) **EP 1 199 266 B1**
(45) Veröffentlichungstag und Bekanntmachung des Hinweises auf die Patenterteilung: **26.05.2004**
(21) Anmeldenummer: 01124778.0
(22) Anmeldetag: 17.10.2001
(51) Int. Cl.: B65G 53/14, B65G 53/24

(54) **Verfahren und Vorrichtung zum Entleeren von Schüttgut**
Device and method for evacuating bulk material
Dispositif et procédé pour l'évacuation de produit en vrac

(30) Priorität: 17.10.2000 DE 10051400
(43) Veröffentlichungstag der Anmeldung: 24.04.2002
(73) Patentinhaber: Wilhelm, Klaus, 83026 Rosenheim (DE)
(72) Erfinder: Wilhelm, Klaus, 83026 Rosenheim (DE)
(74) Vertreter: Alber, Norbert, Dipl.-Ing.

(56) Entgegenhaltungen:
- EP-A- 0 765 829
- DE-A- 19 628 429
- US-A- 6 036 408

## Beschreibung

### I. Anwendungsgebiet

Die Erfindung betrifft eine Vorrichtung und ein Verfahren zum Entleeren von Schüttgut aus flexiblen, insbesondere sack- oder beutelartigen Behältnissen.

### II. Technischer Hintergrund

In vielen technischen Bereichen liegen die zu verarbeitenden Ausgangsprodukte als Schüttgut vor. Dies ist der Fall beim Rohmaterial für Spritzgussmaschinen, in denen Kunststoff verspritzt wird, wobei das Kunststoff-Granulat in der Regel in sogenannten Big-Bags, also großen sackartigen Behältnissen, angeliefert wird.

Eine andere Anlieferungsform sind sogenannte Oktabins, also Behälter mit einer festen, achteckigen Umfangswand, in denen der flexible Innenbehälter in Form eines Foliensackes, der mit Granulat gefüllt ist, angeordnet ist.

Gleiches gilt für andere Verwendungszwecke wie etwa Stahlkies, der zum Sandstrahlen beziehungsweise Kugelstrahlen verwendet wird, oder Split, wie er für Pflasterarbeiten und ähnliches sowie zur Herstellung von Betonteilen verwendet wird.

Entleervorrichtungen bestehen dabei üblicherweise aus einem galgenförmigen oder portalförmigen Grundgestell, unter welches der Behälter gestellt wird. Vom Grundgestell aus wird von oben her eine Absaugvorrichtung in das oben offene Behältnis eingeführt, und mittels Absaugen über einen Absaugschlauch das Schüttgut zur gewünschten Stelle transportiert.

Als Absaugvorrichtung dient im einfachsten Fall ein Saugrohr, welches jedoch an seinem vorderen Ende nur einen kleinen Durchmesser besitzt und deshalb über den demgegenüber vergleichsweise großen Oberflächenbereich des Behälters, der größer als 1 m² sein kann, in Querrichtung und auch in der Vertikalen von einer Bedienperson nachgeführt werden muss.

Weitere Probleme liegen im Ansaugen des Foliensackes durch das Saugrohr und das mangelnde Nachrutschen des Schüttgutes bei nur noch geringem Restfüllstand im Gebinde.

Deshalb wird anstelle eines einfachen Saugrohres häufig ein demgegenüber verbreiterter Saugkopf verwendet, der mit einer größeren Außenfläche am umgebenden Schüttgut anliegt oder auf diesem Schüttgut schwimmt (EP-A-0 765 829), wobei vorzugsweise noch Vibrationen in das Schüttgut eingebracht werden, um dieses überhaupt oder besser rieselfähig zu machen, da die Vibrationen eine Fluidisierung des Granulates bewirken sollen.

Gleichzeitig wird das sackartige, flexible Behältnis am oberen Rand hochgezogen, wodurch die Flanken des Behältnisses zunehmend steiler werden, was noch dadurch begünstigt werden kann, dass der Halterahmen, an dem der obere Rand des Behältnisses befestigt wird, einen geringeren Durchmesser besitzt als das flexible Behältnis im gefüllten Zustand (DE-A-196 28 429).

Dennoch gibt es Schüttgüter, deren Körner eine sehr hohe Reibung gegeneinander sowie gegenüber einem anderen Gegenstand, etwa einer Absaugvorrichtung, besitzen, so dass trotz aller vorgenannter Maßnahmen unterhalb der Absaugvorrichtung bei solchen Schüttgütern ein so großer Freiraum mangels Nachrutschen von Schüttgut entstehen kann, dass ein weiteres Absaugen nicht gelingt.

### III. Darstellung der Erfindung

### a) Technische Aufgabe

Es ist daher die Aufgabe gemäß der vorliegenden Erfindung, ein Verfahren sowie eine diesbezügliche Vorrichtung zu schaffen, die auch bei nicht bzw. schwer rieselfähigen Schüttgütern ein Absaugen aus den bekannten, oben offenen flexiblen Behältnissen nach oben ohne manuelle Unterstützung ermöglichen.

### b) Lösung der Aufgabe

Diese Aufgabe wird durch die Merkmale der Ansprüche 1 bzw. 7 gelöst. Vorteilhafte Ausführungsformen ergeben sich aus den Unteransprüchen. Durch das wiederholte Hochheben der Absaugvorrichtung über das Schüttgut hinaus und anschließendes Absenken auf das Schüttgut werden - bei zwischenzeitlich gebildeten nicht nachrutschenden kraterförmigen Vertiefungen im Schüttgut - diese Kraterwände beim erneuten Absenken der Absaugvorrichtung in der Regel zum Einsturz gebracht durch das Entlanggleiten des Randes der Absaugvorrichtung an den Kraterwänden.

Die Zeitdauer beziehungsweise Tiefe des Einsinkens soll dabei so gewählt werden, dass die Bildung eines zu großen, nicht mehr durch Saugen überbrückbaren, Hohlraumes unter der Absaugvorrichtung beziehungsweise um die Absaugvorrichtung herum nicht mehr stattfinden kann.

Entsprechend muss dieser Wert vorzugsweise einstellbar sein, und in Abhängigkeit der Eigenschaften des Schüttgutes, insbesondere dessen Reibung und spezifischem Gewicht sowie der Korngröße, nachgeregelt werden.

Eine verbesserte Wirkung dieser Vorgehensweise tritt ein, wenn vor erneutem Absenken die Absaugvorrichtung seitlich, also horizontal, versetzt wird, um nicht genau in der vorher erzeugten Vertiefung, sondern seitlich davon aufzusetzen.

Vorzugsweise sollte deshalb ein Versatz in zwei voneinander verschiedenen Querrichtungen zur Vertikalen möglich sein, um so die gesamte Oberfläche des Schüttgutes, vorzugsweise an jedem beliebigen Punkt, anfahren zu können.

Dabei sollte das Auflegen der Absaugvorrichtung auf der Oberfläche mit möglichst großer Kraft, also vorzugsweise mit einer Kraft, die höher ist als die reine Gewichtskraft der Absaugvorrichtung bzw. des dafür verwendeten Saugkopfes, erfolgen.

Bevorzugt wird die Absaugvorrichtung also aktiv mit zusätzlich aufgebrachter Kraft von oben auf die Oberfläche des Schüttgutes aufgedrückt oder die Absaugvorrichtung, insbesondere ein hierfür verwendeter Saugkopf, wird von oben auf die Oberfläche des Schüttgutes fallengelassen.

Entsprechend ist auch die Verwendung eines Saugkopfes vorteilhaft, dessen Außendurchmesser deutlich größer als die Saugöffnung sein sollte, da hierdurch ein größerer Oberflächenbereich des Schüttgutes beim Auflegen beeinflusst wird.

Zusätzlich kann nach wie vor mit Eindringen von Vibrationen in das Schüttgut, beispielsweise über einen solchen Saugkopf selbst, beim Absaugen gearbeitet werden, für viele Anwendungsfälle ist jedoch das Einbringen von Vibrationen nicht mehr notwendig, so dass der Saugkopf wesentlich einfacher gestaltet werden kann.

Der Saugkopf sollte so gestaltet sein, dass er mit seiner gesamten Grundfläche auf das Schüttgut einwirkt, und zu diesem Zweck entlang seines Außenumfanges nach unten weisend wenigstens einen Vorsprung, beispielsweise in Form eines umlaufenden Randes, aufweist, der sich dann beim Absenken als erstes oder sehr früh in das Schüttgut eingräbt.

Wenn dies am Rand eines bestehenden Kraters in der Oberfläche geschieht, wird hierdurch in der Regel die Kraterwand zum Einsturz gebracht, und dadurch die Oberfläche des Schüttgutes egalisiert.

Sofern ein solcher Absaugkopf gemäß den bisher bekannten Lösungen mit Hilfe eines Seilzuges, welcher oberhalb des Behältnisses an einem Galgen und von dort entlang einer Vertikalstrebe über Umlenkrollen geführt wird, kann ein solcher Seilzug mit Hilfe eines Hubzylinders, in der Regel eines pneumatisch arbeitenden Hubzylinders, der vorzugsweise an der Vertikalstrebe vertikal angeordnet ist, angehoben und abgesenkt werden. Eine über die Gewichtskraft hinausgehende Aufbringkraft gegenüber dem Schüttgut kann nur erreicht werden durch Fallenlassen des Saugkopfes aus einem Abstand oberhalb des Schüttgutes auf dessen Oberfläche hinab.

Zusätzlich kann ein Querversatz erreicht werden, indem die letzte Umlenkrolle entlang der Querstrebe verlagerbar ist, beispielsweise mit Hilfe eines weiteren Arbeitszylinders.

Eine Verlagerung in einer zweiten Querrichtung ist vor allem bei einer galgenförmigen Ausgestaltung des Gestells dadurch leicht möglich, dass die Querstrebe des Galgens gegenüber der Vertikalstrebe, also um eine vertikale Achse, verschwenkbar ist.

Bei einer portalförmigen Ausgestaltung muss dagegen die Querstrebe entlang dem oberen Ende beider ihn stützenden Vertikalstreben in Querrichtung verfahren werden.

Mittels einer Steuerung kann dabei sowohl das Maß des Anhebens, als auch die Fallhöhe bzw. die Position des Auslösens für den Fallvorgang als auch die Zeitdauer des Belassens auf beziehungsweise im Schüttgut und/oder die Zeitdauer des Anhebens festgelegt werden, wobei die Zeitdauer des Anhebens so kurz wie für das Anheben möglich gewählt wird und vorzugsweise ausschließlich von der Geschwindigkeit des Anhebens des Saugkopfes abhängt.

Eine weitere Möglichkeit besteht darin, die Saugvorrichtung, insbesondere einen Saugkopf oder das Ende des Saugrohres, um einen Mittelpunkt in einer z. B. horizontalen oder schrägen Ebene kreisen zu lassen.

Gerade bei einem einfachen Saugrohr ist dies durch ein schräg nach unten außen gekröpftes Ende des Saugrohres auf einfache Art und Weise möglich, wobei unter Umständen kein mit elektrischer Energie zu versorgender motorischer Antrieb, sondern die beim Absaugen strömende Saugluft selbst als Antrieb für diese Drehbewegung genutzt werden kann, beispielsweise, indem diese Saugluft ohne das angesaugte Granulat, etwa in einem Bypass, über entsprechend geformte Luftleitschaufeln geführt wird, die ihrerseits mit dem drehbaren Teil der Absaugvorrichtung drehfest gekoppelt sind.

Dadurch kann erreicht werden, dass der Wirkungsradius der Absaugvorrichtung vergrößert wird und insbesondere so groß ist, dass er die gesamte Grundfläche des Behältnisses abdeckt. Zu diesem Zweck ist insbesondere der Radius der Drehbewegung oder Schwenkbewegung einstellbar, beispielsweise durch Ausziehbarkeit des gekröpften Endes des Saugrohres.

Bei einer drehbaren Ausgestaltung sollten insbesondere radial vorstehende Vorsprünge an der Absaugvorrichtung, gegen das Schüttgut, also nach unten oder schräg unten außen vorstehend, angeordnet sein, um durch Drehung oder Verschwenkung der Absaugvorrichtung eine schabende und lösende Wirkung an der Oberfläche des Schüttgutes hervorzurufen.

### c) Ausführungsbeispiele

Ausführungsformen gemäß der Erfindung sind anhand der Zeichnungen nachfolgend näher beschrieben. Es zeigen:
- Figuren 1:: eine Vorrichtung mit galgenförmigem Grundgestellt in verschiedenen Entleerungszuständen und Ansichten und
- Figuren 2:: eine Entleervorrichtung mit portalförmigem Grundgestell in den analogen Zuständen sowie
- Figuren 3:: drehbare Absaugvorrichtungen.

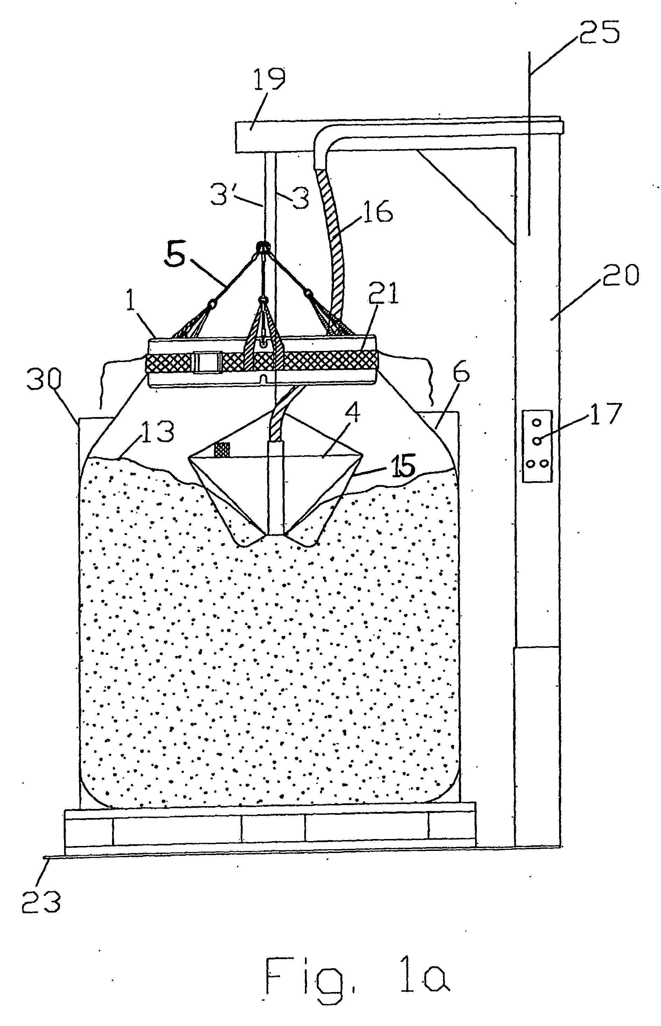

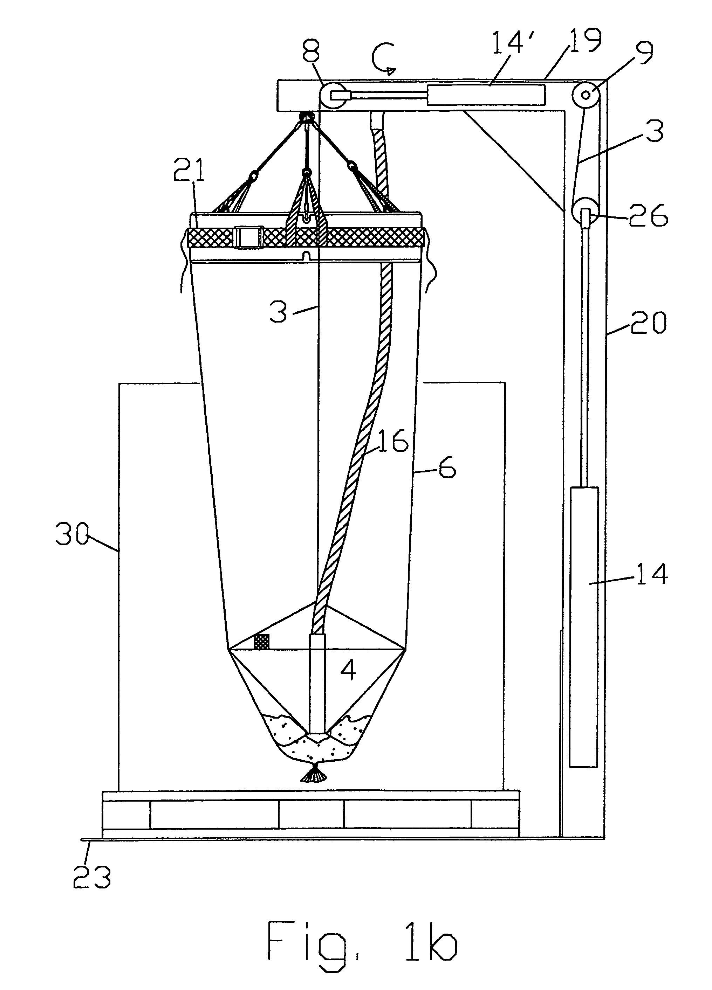

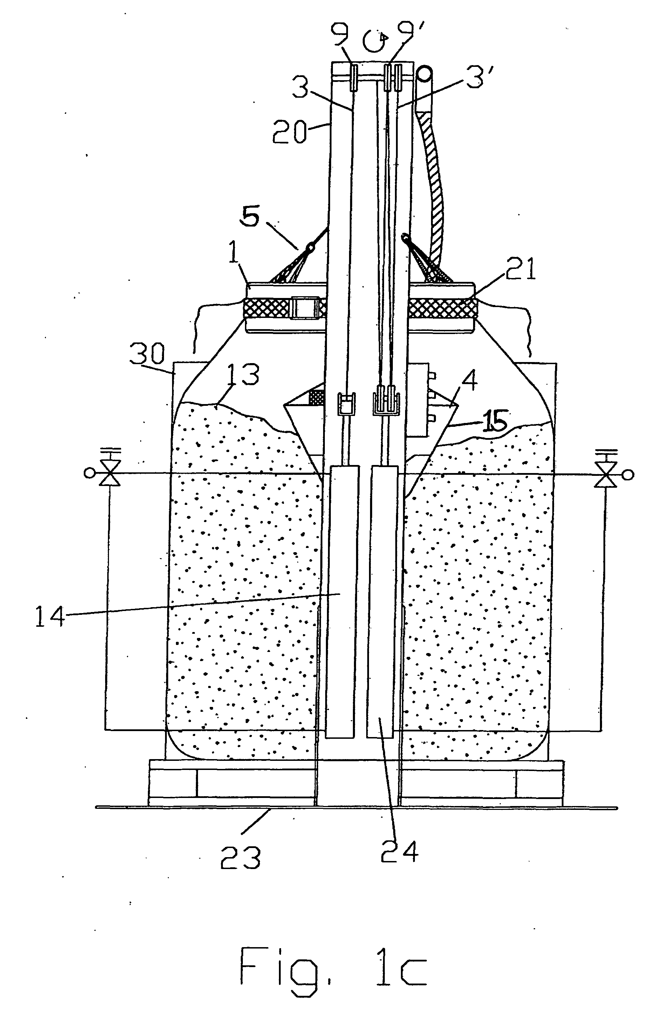

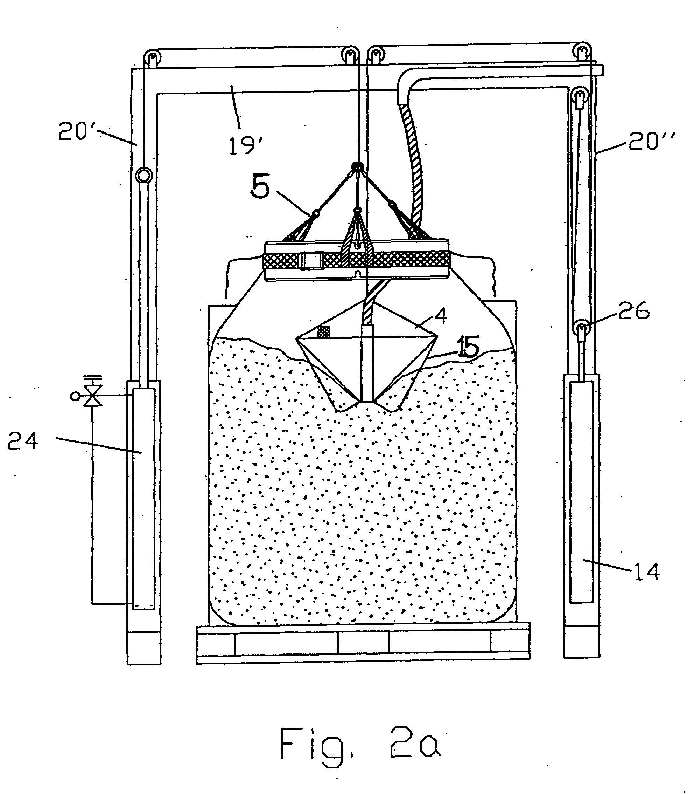

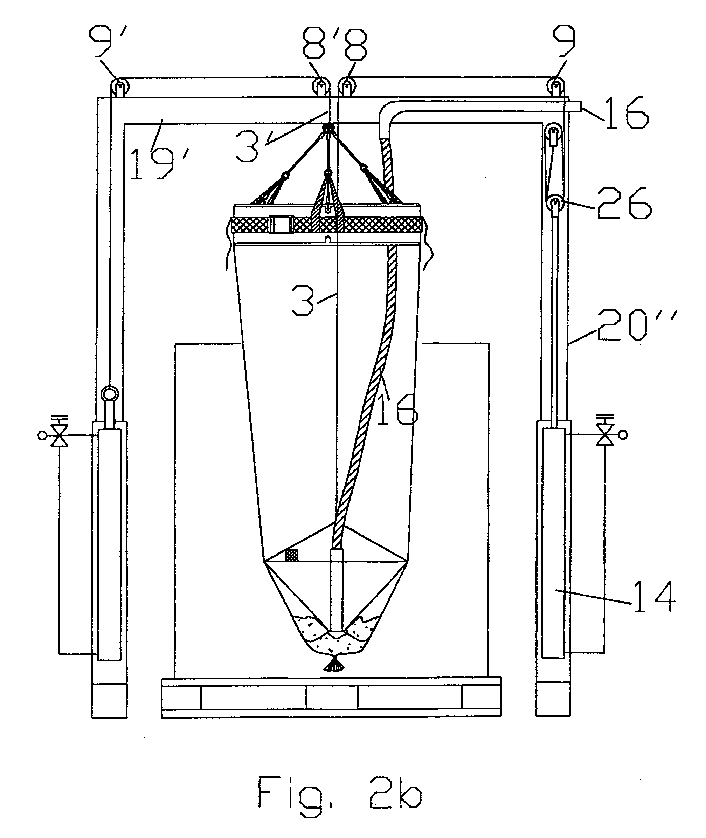

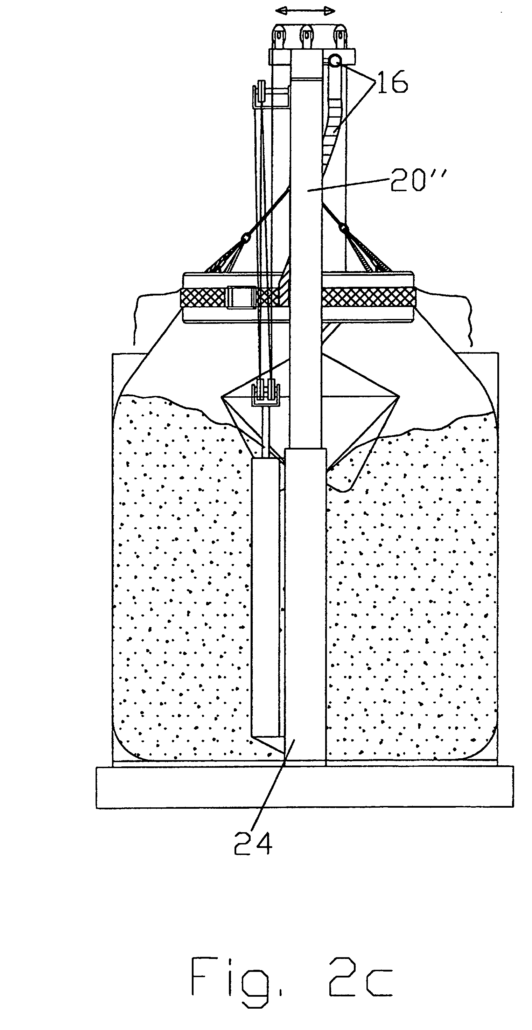

In den Figuren 1 und 2 zeigen die Figuren 1a und 1b die jeweilige Entleervorrichtung in der Seitenansicht, einmal bei noch fast vollständiger Füllung des Behältnisses 6 mit Schüttgut 13 und einmal bei fast vollständig geleertem Behältnis 6. Die Darstellung c zeigt die rückwärtige Ansicht des Zustandes gemäß Fig. a.

Das Behältnis 6 ist dabei ein in einem Oktabin 30, also mit festen Behälterwänden, aufgenommenen Foliensack, der auf einer Palette unter dem Überbau der Entleervorrichtung steht. Die Entleervorrichtung umfasst dabei jeweils einen Halterahmen 1, der horizontal ringförmig zentrisch über dem sackförmigen Behältnis 6 angeordnet ist und den oberen Rand des Behältnisses 6 mittels eines Halteelements 21 in Form eines um den Halterahmen 1 umlaufenden Klemmgurtes festhält.

Der Halterahmen 1 wird mittels eines Seilzuges 3' nach oben gezogen, der über Umlenkrollen 9' entlang der Querstrebe 19 und der Vertikalstrebe 20 entlanggeführt ist und mit einem Behälterzylinder 24 verbunden ist, mit dessen Hilfe der Halterahmen 1 hochgezogen und damit - wie in Fig. b ersichtlich - dessen Seitenwände geradegezogen werden können.

Da der Halterahmen 1 einen geringeren Durchmesser als das Behältnis 6 im gefüllten Zustand besitzt, werden die Seitenwände des sackförmigen Behältnisses vor allem in dem Bereich oberhalb des Schüttgutes 13 nach innen gezogen, bis - gegen Ende des Entleervorganges - sie an dem Saugkopf 4 außen anliegen.

Der Saugkopf 4, von dem der Saugschlauch 16 nach oben wegführt, ist ebenfalls mittels eines Seilzuges 3, welcher über analoge Umlenkrollen 8, 9 geführt ist, zu einem weiteren Hubzylinder 14 geführt, welcher dem Anheben und Absenken des Saugkopfes dient.

Beide Zylinder 14, 24 sind vertikal an der Vertikalstrebe 20, insbesondere an deren vom Oktabin 30 abgewandten Rückseite, befestigt, und werden über eine Steuerung 17 angesteuert, die entweder an der Vertikalstrebe 20 oder an einem separaten Hängekabel befestigt ist.

Mittels der Steuerung 17 wird eingestellt, wie oft der Saugkopf 4 aus dem Schüttgut 13 herausgezogen und erneut auf dieses abgesenkt wird, und/oder wie tief der Saugkopf 4 nach dem Aufsetzen auf der Oberfläche des Schüttgutes 13 versinken darf, bevor das Anheben und Herausziehen aus dem Schüttgut erfolgt, was ja jeweils mehrfach hintereinander durchgeführt wird.

Ferner kann an der Steuerung 17 einstellbar sein, aus welcher Höhe der Saugkopf 4 beim Aufsetzen auf die Oberfläche des Schüttgutes fallengelassen wird.

In Fig. 1b ist ferner die Möglichkeit einer Querverschiebung der Umlenkrolle 8 des Seilzuges 3 entlang der Querstrebe 19 mittels eines weiteren Arbeitszylinders 14' eingezeichnet. Zeitpunkt und Umfang dessen Bewegung wird ebenfalls mittels der Steuerung 17 gesteuert, beispielsweise, ob Querverfahrung nur dann erfolgt, wenn der Saugkopf 4 über dem Schüttgut 13 schwebt, oder auch während er sich im Schüttgut 13 befindet. Vorzugsweise ist bei diesen Lösungen der Durchmesser des Halterahmens 1 nur geringfügig kleiner als der Durchmesser des Oktabins, nämlich maximal um den Durchmesser des Saugkopfes 4 kleiner.

In den Figuren 1 ist an der Vertikalstrebe 20 am oberen Ende eine einseitig auskragende Querstrebe 19 angeordnet, die sich bis etwa über die Mitte der Position für den Oktabin 30 erstreckt.

Neben einer Verfahrung der Umlenkrolle 8 entlang der Querstrebe 19 als erste Querrichtung kann eine zweite Verschiebung in Querrichtung ermöglicht werden durch Verschwenken dieser Querstrebe 8 um eine vertikale Achse 25 bezüglich der Vertikalstrebe 20.

Eine derartige Verlagerung der Querstrebe 19' bei der portalförmigen Ausgestaltung des Überbaus der Vorrichtung gemäß den Figuren 2 ist möglich durch Verfahrung der Querstrebe 19' - wie in Fig. 2c durch den Pfeil dargestellt - gegenüber den beiden oberen Enden der die Querstrebe 19' beidseits stützenden Vertikalstreben 20', 20".

Um - bei beiden Ausgestaltungsformen - den Saugkopf 4 mittels des Seilzuges 3 über die gewünschte vertikale Distanz von knapp unterhalb der Querstrebe 19 bzw. 19' bis auf den Boden des Oktabins absenken zu können, ist der Seilzug 3 am Ende der Kolbenstange des Hubzylinders 14 nicht direkt befestigt, sondern an dessen Ende nur über eine weitere Rolle 26 geführt, und endet an einem ortsfesten Punkt.

Dadurch wird eine Übersetzung dergestalt erzielt, dass bei Verlagerung der Kolbenstange des Zylinders 14 um eine Längeneinheit der Saugkopf 4 um zwei Längeneinheiten bewegt wird.

Damit ist die Höhe der Vertikalstrebe 20 bzw. 20" ausreichend zur Befestigung eines etwa halb so langen Zylinders 14 daran, wenn somit die andere Hälfte der Höhe der Vertikalstrebe 20 bzw. 20" als Bewegungsweg der Rolle 26 zur Verfügung steht.

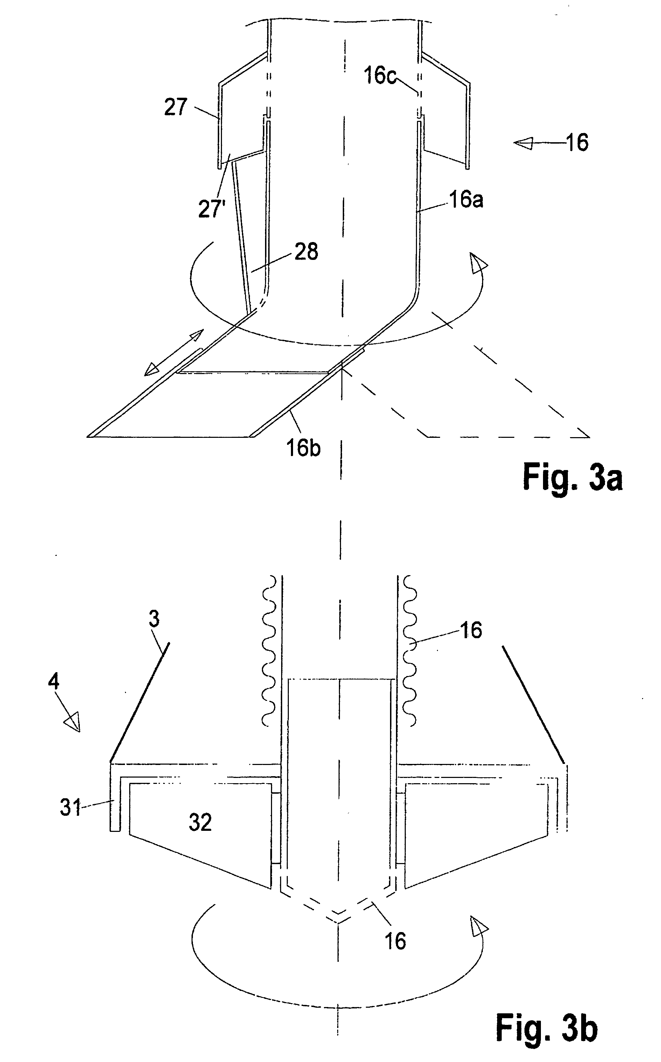

Die Figuren 3 zeigen weiterhin Möglichkeiten, eine Saugvorrichtung drehbar auszugestalten, und dadurch den Wirkradius einerseits zu vergrößern und andererseits einen mechanischen Schabeeffekt zusätzlich aufzubringen.

Fig. 3a zeigt eine Lösung mit Saugrohr 16, wobei sich vorzugsweise an den nach unten außen gekrümmten Abschnitt 16a ein teleskopierbarer Abschnitt 16b zur Vergrößerung des Wirkradius anschließt. Zusätzlich ist der Abschnitt 16a gegenüber einem festen, stromaufwärts liegenden Schlauchabschnitt bzw. Rohrabschnitt 16c drehbar befestigt mittels eines Leitrades 27 mit Leitschaufeln 27'. Die Leitschaufeln 27' sind so gekrümmt, dass ein darüber geführter Luftstrahl, der in Form eines Bypasses 28 ohne oder auch mit abgesaugtem Granulat aus dem Saugrohr 16 abgezweigt wird, über das Leitrad 27 geführt wird und dadurch ein umfangsförmiger Rückstoßeffekt dieses über den Bypass geführten Stromes gegenüber den Leitschaufeln 27' eintritt, die den beweglichen Teil des Saugrohrs 16 in Drehung versetzen.

Fig. 3b zeigt einen diesbezüglich ausgestalteten Saugkopf 4, der wie üblich an einem Seilzug 3 hängt und einen mittigen Saugschlauch 16 umfasst. Zwischen dem Außenumfang des Saugschlauches 16 und dem äußeren Rand des Saugkopfes 4, der insbesondere einen nach unten weisenden, umlaufenden Rand 31 aufweist, sind wiederum drehbare, radial verlaufende Schaber 32 angeordnet, die die Oberfläche des Schüttgutes 13 mechanisch auflockern sollen.

Die Schaber 32 können relativ zum vorderen Ende des Saugrohres 16 drehbar ausgestaltet sein oder sich zusammen mit dem vorderen Ende des Saugrohres drehen. Die Drehbarkeit kann wiederum - wie anhand der Fig. 3 erläutert - mittels der Saugluft selbst herbeigeführt oder mittels eines Elektromotors bewirkt werden.

### BEZUGSZEICHENLISTE

- 1: Halterahmen
- 2: Seile
- 3: Seilzug
- 4: Saugkopf
- 5: Hebezeug
- 6: Behältnis
- 7: Oktabin
- 8: Umlenkrolle
- 9: Umlenkrolle
- 11: Kolbenstange
- 13: Schüttgut
- 14': Hubzylinder
- 15: Absaugvorrichtung
- 16: Saugschlauch
- 17: Steuerung
- 18: Absaugkopf
- 19: Querstrebe
- 20: Vertikalstrebe
- 21: Halteelemente
- 22: Kante
- 23: Grundplatte
- 24: Behälterzylinder
- 25: Achse
- 26: Rolle
- 27: Leitrad
- 28: Bypass
- 30: Oktabin
- 31: Rand
- 32: Schaber

## Patentansprüche

1. Verfahren zum Entleeren von Schüttgut (13) aus flexiblen, insbesondere sack- oder beutelartigen Behältnissen (6) mittels einer Absaugvorrichtung (15), wobei
- die Absaugvorrichtung (15) von oben her in das Behältnis (6) eingeführt wird,
- ein Hebezeug (5) umfassend einen ringförmigen oder mehreckigen Halterahmen (1), an dem Halteelemente (21) befestigt sind, die mit dem oberen Randbereich des Behältnisses (6) in Halteeingriff gebracht werden,
- das Hebezeug (5) mittels einer Hubeinrichtung (12) in vertikaler Richtung bewegt wird, um das Behältnis (6) zu strecken,
**dadurch gekennzeichnet, dass**
zum Leeren des Behältnisses (6) hintereinander
- die Absaugvorrichtung (15) auf die Oberfläche des Schüttgutes (13) aufgelegt wird,
- ein Einsinken der Absaugvorrichtung (15) in das Schüttgut (13) aufgrund Absaugens von Schüttgut (13) durch die Absaugvorrichtung (15) hingenommen wird,
- die Absaugvorrichtung (15) über die Oberfläche des nicht nachrutschenden Kraters im Schüttgut (13), insbesondere kurzzeitig, angehoben wird,
wobei diese Schritte automatisch und mehrfach hintereinander während der Leerung ein und desselben Behälters durchgeführt werden.

2. Verfahren nach Anspruch 1,
**dadurch gekennzeichnet, dass**
beim Auflegen der Absaugvorrichtung (15) auf der Oberfläche des Schüttgutes (13) mehr als nur die statische Gewichtskraft der Absaugvorrichtung (15) vertikal von oben auf das Schüttgut (13) aufgebracht wird, insbesondere die Absaugvorrichtung (15) auf die Oberfläche des Schüttgutes (13) fallengelassen wird oder die Absaugvorrichtung (15) von oben auf das Schüttgut (13) aktiv aufgedrückt wird.

3. Verfahren nach einem der vorhergehenden Ansprüche,
**dadurch gekennzeichnet , dass**
- der Zeitraum des Einsinkens der Absaugvorrichtung (15) mindestens fünfmal, besser mindestens 10 Mal so lang dauert wie die Phase des Anhebens über das Schüttgut (13), oder
- die Zeitdauer des Einsinkens und/oder des Anhebens eingestellt werden in Abhängigkeit von Rieselfähigkeit, Reibung und Dichte des Schüttgutes (13).

4. Verfahren nach einem der vorhergehenden Ansprüche,
**dadurch gekennzeichnet , dass**
vor und/oder beim Absenken der Absaugvorrichtung (15) auf die Oberfläche des Schüttgutes (13) die Absaugvorrichtung (15) in wenigstens einer Querrichtung zur Vertikalen innerhalb des Bereiches der Oberfläche des Schüttgutes (13) verlagert wird.

5. Verfahren nach einem der vorhergehenden Ansprüche,
**dadurch gekennzeichnet , dass**
wenigstens im Bereich der Absaugvorrichtung (15) wenigstens während des Absaugvorganges Vibrationen in das Schüttgut (13) eingebracht werden, insbesondere mittels der Absaugvorrichtung (17) selbst.

6. Vorrichtung zum Entleeren von Schüttgut (13) aus flexiblen, insbesondere sack- oder beutelartigen Behältnissen (6) mittels einer Absaugvorrichtung (15), wobei
- die Absaugvorrichtung (15) von oben her in das Behältnis (6) eingeführt wird,
- ein Hebezeug (5) umfassend einen ringförmigen oder mehreckigen Halterahmen (1), an dem Halteelemente (21) befestigt sind, die mit dem oberen Randbereich des Behältnisses (6) in Halteeingriff gebracht werden,
- das Hebezeug (5) mittels einer Hubeinrichtung (12) in vertikaler Richtung bewegt wird, um das Behältnis (6) zu strecken,
**dadurch gekennzeichnet, dass**
das Hebezeug (5) eine Steuerung (17) umfasst, die in der Lage ist, die Absaugvorrichtung (15) abwechselnd auf der Oberfläche des Schüttgutes (13) aufzulegen und dort hinein absinken zu lassen und anschließend die Absaugvorrichtung (15) vorübergehend wieder über die Oberfläche des nicht abrutschenden Kraters im Schüttgut (13) anzuheben.

7. Vorrichtung nach einem der vorhergehenden Vorrichtungsansprüche,
**dadurch gekennzeichnet, dass**
die Vorrichtung eine Querverlagerungseinheit zum Verlagern in wenigstens einer horizontalen Querrichtung im Grundflächenbereich des Behältnisses (6) umfasst.

8. Vorrichtung nach einem der vorhergehenden Vorrichtungsansprüche,
**dadurch gekennzeichnet, dass**
- das Hebezeug (5) einen Seilzug (3) umfasst und die letzte Umlenkrolle (8) des Seilzuges vor der Absaugvorrichtung (15) in Querrichtung entlang der sie tragenden Querstrebe (19) verlagerbar ist, und insbesondere
- die Querstrebe (19) an einer sie tragenden Vertikalstrebe (20) um eine vertikale Achse verschwenkbar ist.

9. Vorrichtung nach einem der vorhergehenden Vorrichtungsansprüche,
**dadurch gekennzeichnet, dass**
- das Hebezeug (5) einen Seilzug (3) umfasst, der mit Hilfe eines, insbesondere pneumatischen, Hubzylinders (12), der an der Vertikalstrebe (20) angeordnet ist, bewegt werden kann, und insbesondere
- die letzte Umlenkrolle (8) des Seilzuges (3) oberhalb der Absaugvorrichtung (15) in Querrichtung entlang der Querstrebe (19) mittels eines weiteren Pneumatikzylinders (12') in einer ersten Querrichtung verfahrbar ist.

10. Vorrichtung nach einem der vorhergehenden Vorrichtungsansprüche,
**dadurch gekennzeichnet, dass**
die Umlenkrolle (8) zusätzlich in einer zweiten Querrichtung, die im Winkel zur ersten Querrichtung verläuft, horizontal verlagerbar ist.

11. Vorrichtung nach einem der vorhergehenden Vorrichtungsansprüche,
**dadurch gekennzeichnet, dass**
- die Absaugvorrichtung (15) einen Saugkopf (4) umfasst, dessen Durchmesser in der Aufsicht betrachtet deutlich größer ist als der das Schüttgut (13) vom Saugkopf (4) wegfördemde Saugschlauch (16) , und insbesondere
- der Saugkopf (4) im unteren Bereich eine konisch sich nach unten verjüngende Außenkontur aufweist.

12. Vorrichtung nach einem der vorhergehenden Vorrichtungsansprüche,
**dadurch gekennzeichnet, dass**
der Saugkopf (4) an seinem Außenumfang wenigstens einen nach unten vorstehenden Vorsprung, insbesondere Kanten, insbesondere eine ringförmig umlaufende Kante, aufweist.

## Claims

1. Procedure to unload bulk material (13) from flexible packings (6), in particular sack or bag shaped ones, by means of a suction device (15), whereupon
- the suction device (15) is inserted from above in the packing (6),
- there is a lifting apparatus (5) comprising an annularly or polygonally shaped support frame (1), supporting elements (21) clamped up to the superior side of the packing (6) are attached to,
- the lifting apparatus (5) is vertically shifted by means of a lifting device (12) in order to stretch the packing (6), **characterized in that**, in order to unload the packing (6),
- the suction device (15) is set on the surface of the bulk material (13),
- because of the suction of the bulk material (13) by means of the suction device (15) there takes place a dipping of the suction device (15) into the bulk material (13), - the suction device (15) is lifted, in particular for a short time, over the surface of the rigid crater in the bulk material (13), whereupon these steps are automatically and several times consecutively carried out during the unloading of one and the same packing.

2. Procedure according to claim 1, **characterized in that** on setting the suction device (15) on the surface of the bulk material (13) there is vertically applied from above a force greater than the static weight force of the suction device (15), in particular the suction device (15) is let to fall on the surface of the bulk material (13) or the suction device is actively pressed from above against the bulk material (13).

3. Procedure according to one of the preceding claims, **characterized in that**
- the suction device (15) dipping time interval is at least five times, preferably ten times, greater that the time interval needed to lift it over the bulk material (13), or
- the dipping and/or lifting time intervals are established according to the fluidity, friction and density conditions of the bulk material (13).

4. Procedure according to one of the preceding claims, **characterized in that** before and/or during the lowering of the suction device (15) on the surface of the bulk material (13), the suction device (15) is shifted inside the surface area of the bulk material (13), at least in one of the transversal directions in respect of the vertical one.

5. Procedure according to one of the preceding claims, **characterized in that** at least in the area of the suction device (15), at least during the suction process, there are produced vibrations into the bulk material, in particular by means of the suction device (15) itself.

6. Device to unload bulk material (13) from flexible packings (6), in particular sack or bag shaped ones, by means of a suction device (15), whereupon
- the suction device (15) is inserted from above into the packing (6),
- there is a lifting apparatus (5) comprising an annularly or polygonally shaped support frame (1), supporting elements (21) clamped up to the superior side of the packing (6) are attached to,
- the lifting apparatus (5) is vertically shifted by means of a lifting device (12) in order to stretch the packing (6), **characterized in that** the lifting apparatus (5) comprises an operating unit (17) able to alternatively set the suction device (15) on the surface of the bulk material (13) and let it dip there, and further temporarily lift again the suction device (15) over the surface of the rigid crater in the bulk material (13).

7. Device according to one of the preceding device claims, **characterized in that** the device comprises a transversal shift unit for transversal shift in at least a horizontal transversal direction in the base surface area of the packing (6).

8. Device according to one of the preceding device claims, **characterized in that**
- the lifting apparatus (5) comprises a traction cable (3) while the last guide roll (8) of the traction cable before the suction device (15) can be shifted in a transversal direction along the transversal strut (19) that is supporting it, and in particular
- the transversal strut (19) can gyrate around a vertical axis on a vertical strut (20) that is supporting it.

9. Device according to one of the preceding device claims, **characterized in that**
- the lifting apparatus (5) comprises a traction cable (3) which can be shifted by means of a lifting cylinder (12), in particular an air-operated one, mounted on the vertical strut (20), and in particular
- the last guide roll (8) of the traction cable (3) can be shifted in a first transversal direction over the suction device (15), and in a transversal direction along the transversal strut (19) by means of a supplementary air-operated cylinder (12').

10. Device according to one of the preceding device claims, **characterized in that** the guide roll (8) can be supplementary horizontally shifted in a second transversal direction, at an angle in respect of the first transversal direction.

11. Device according to one of the preceding device claims, **characterized in that**
- the suction device (15) comprises a suction head (4) whose diameter when seen from above is considerable greater than the suction hose (16) transporting the bulk material (13) from the suction head (4), and in particular
- in the inferior area, the suction head (4) has a conically downwards narrowing exterior contour.

12. Device according to one of the preceding device claims, **characterized in that** the suction head (4) has on its exterior circumference at least one downwards jutting prominence, in particular rims, in particular an all around extending annular rim.

## Revendications

1. Procédé pour le vidage du matériau en vrac (13) de récipients flexibles (6), spécialement en forme de sac ou poche par l'intermédiaire d'un dispositif d'aspiration 15, ou
- le dispositif d'aspiration (15) est introduit d'en haut dans le récipient (6),
- un appareil de levage (5) incluant en cadre (1) de forme annulaire ou polygonale duquel sont fixés les éléments de soutènement (21) qui sont fixés au bord supérieur du récipient (6),
- l'appareil de levage (5) est déplacé dans la direction verticale par l'intermédiaire d'un dispositif de levage (12) pour tendre le récipient (6), **caractérisé en ce que**, pour le vidage du récipient (6),
- le dispositif d'aspiration (15) est assis sur la surface du matériau en vrac (13),
- à cause de l'aspiration du matériau en vrac (13) par l'intermédiaire du dispositif d'aspiration (15) a lieu un affaissement du dispositif d'aspiration (15) dans le matériau en vrac (13),
- le dispositif d'aspiration (15) est levé spécialement pour court temps au-dessus de la surface du cratère non glissant du matériau en vrac (13), où ces pas se réalisent dans un mode automate et de plusieurs fois consécutives pendant le vidage d'un et le même récipient.

2. Procédé selon la revendication 1, **caractérisé en ce que**, à la position du dispositif d'aspiration (15) sur la surface du matériau en vrac (13) s'applique verticalement d'en haut, plus que seulement la force de poids statique du dispositif d'aspiration (15), spécialement le dispositif d'aspiration (15) est laissé tomber sur la surface du matériau en vrac (13) ou le dispositif d'aspiration est pressé d'en haut activement sur le matériau en vrac (13).

3. Procédé selon l'une des revendications antérieures, **caractérisé en ce que**
- l'intervalle de temps de l'affaissement du dispositif d'aspiration (15) dure au moins de 5 fois préférable au moins de 10 fois plus que la phase de levage au-dessus du matériau en vrac (13), ou
- la durée de l'affaissement et/ou du levage sont établies en fonction des propriétés d'écoulement, friction et densité du matériau en vrac (13).

4. Procédé selon l'une des revendications antérieures, **caractérisé en ce que**, avant et/ou pendant la descente du dispositif d'aspiration (15) sur la surface du matériau en vrac (13), le dispositif d'aspiration (15) est déplacé à l'intérieur de la zone de la surface du matériau en vrac (13), dans au moins l'une d'entre les directions transversales, par rapport à la direction verticale.

5. Procédé selon l'une des revendications antérieures, **caractérisé en ce que**, au moins dans la zone du dispositif d'aspiration (15) au moins pendant le procès d'aspiration on applique dans le matériau en vrac des vibrations, spécialement même par l'intermédiaire du dispositif d'aspiration.

6. Dispositif pour le vidage du matériau en vrac (13) du récipient (6), flexible, spécialement en forme de sac ou poche par l'intermédiaire d'un dispositif d'aspiration (15), ou
- le dispositif d'aspiration (15) est introduit d'en haut dans le récipient (6),
- un appareil de levage (5) incluant un cadre (1) de forme annulaire ou polygonale duquel sont fixés les éléments de soutènement (21) qui sont fixés au bord supérieur du récipient (6),
- l'appareil de levage (5) est déplacé dans la direction verticale par l'intermédiaire d'un dispositif de levage (12) pour tendre le récipient (6), **caractérisé en ce que** l'appareil de levage (5) comprend un dispositif de commande (17) qui est en mesure de faire alternativement le dispositif d'aspiration (15) s'asseoir sur la surface du matériau en vrac (13) et de le laisser se plonger là-bas et en continuation de lever temporairement le dispositif d'aspiration (15) de nouveau au-dessus de la surface du cratère rigide du matériau en vrac (13).

7. Dispositif selon l'une des revendications de dispositif antérieures, **caractérisé en ce que**, le dispositif comprend une unité de déplacement transversale pour le déplacement transversale au moins dans une direction transversale horizontale dans la zone de la surface de base du récipient.

8. Dispositif selon l'une des revendications de dispositif antérieures, **caractérisé en ce que**,
- l'appareil de levage (5) comprend une traction par câble (3) et la dernière poulie-guide (8) de la traction par câble en avant du dispositif d'aspiration (15) peut être déplacé dans la direction transversale au long de la poutre transversale (19) qui la soutient et spécialement
- la poutre transversale (19) peut pivoter autour un axe vertical sur une poutre verticale (20) qui la soutient.

9. Dispositif selon l'une des revendications de dispositif antérieures, **caractérisé en ce que**,
- l'appareil de levage (5) comprend une traction par câble (3) qui peut être déplacé à l'aide d'un cylindre de levage (12), spécialement un cylindre pneumatique disposé sur la poutre verticale (20) et spécialement
- la dernière poulie-guide (8) de la traction par câble (3) peut être déplacée dans une première direction transversale au-dessus du dispositif d'aspiration (15), en direction transversale au long de la poutre transversale (19) par l'intermédiaire d'un cylindre pneumatique (12') supplémentaire.

10. Dispositif selon l'une des revendications de dispositif antérieures, **caractérisé en ce que**, la poulie - guide (8) peut être déplacée horizontalement dans un mode supplémentaire dans une deuxième direction transversale située en angle par rapport à la première direction transversale.

11. Dispositif selon l'une des revendications de dispositif antérieures, **caractérisé en ce que**,
- le dispositif d'aspiration (15) comprend une tête d'aspiration (4) dont le diamètre regardé en vue d'en haut est considérablement plus grand que le tuyau d'aspiration (16) qui fait le transport du matériau en vrac (13) à partir de la tête d'aspiration (4) et spécialement
- dans la zone inférieure la tête d'aspiration (4) présente un contour extérieur conique, rétréci en bas.

12. Dispositif selon l'une des revendications de dispositif antérieures, **caractérisé en ce que**, la tête d'aspiration (4) présente sur sa circonférence extérieure au moins une proéminence sortie en dehors, orientée en bas, spécialement des chants, spécialement un chant annulaire tout autour.
